# EUROPÄISCHE PATENTSCHRIFT

(11) **EP 1 532 805 B1**
(45) Veröffentlichungstag und Bekanntmachung des Hinweises auf die Patenterteilung: **09.05.2007**
(21) Anmeldenummer: 03787662.0
(22) Anmeldetag: 16.07.2003
(51) Int. Cl.: H04N 1/195, G06K 7/10

(54) **BILDAUFNAHMEGERÄT SOWIE VERWENDUNG DES BILDAUFNAHMEGERÄTES**
IMAGE-RECORDING DEVICE AND USE OF SAID IMAGE-RECORDING DEVICE
APPAREIL DE PRISE DE VUE ET UTILISATION DE CET APPAREIL DE PRISE DE VUE

(30) Priorität: 19.07.2002 DE 10233060; 19.11.2002 DE 10254060
(43) Veröffentlichungstag der Anmeldung: 25.05.2005
(73) Patentinhaber: Gavitec AG, 52146 Würselen (DE)
(72) Erfinder: KÜCHEN, Jörg, 52134 Herzogenrath (DE); MÜLLER, Frank, 52074 Aachen (DE); NUNNINK, Laurens, NL-6369 BT Simpelveld (NL)
(74) Vertreter: Castell, Klaus
(86) Internationale Anmeldenummer: PCT/DE2003/002367
(87) Internationale Veröffentlichungsnummer: WO 2004/017624

(56) Entgegenhaltungen:
- EP-A- 0 984 319
- WO-A-02/31749
- US-A- 5 789 732
- US-A- 6 036 095

## Beschreibung

Die Erfindung betrifft einerseits ein Bildaufnahmegerät mit einer Bildaufnahmeeinheit und einer Bildanlagefläche. Andererseits betrifft die Erfindung ein Verfahren zum Aufnehmen eines an einem Display visualisierten Bildes. Darüber hinaus betrifft die Erfindung eine Anordnung aus einer Bildaufnahmeeinheit und einem Display. Die Erfindung betrifft außerdem mehrere Verwendungen des Bildaufnahmegerätes und der Anordnung.

Immer häufiger ist es wünschenswert, dass von einem Display, beispielsweise eines portablen Gerätes, ein angezeigtes Bild auf optischem Wege mit einer Kamera aufgenommen werden kann. Dies gilt insbesondere dann, wenn das an dem Display dargestellte Bild einen maschinenlesbaren optischen Code, zum Beispiel einen Barcode oder eine DataMatrix, enthält.

In Japan ist beispielsweise ein System im Einsatz, mit dem Mobiltelefonbenutzer an einem Getränkeautomaten bargeldlos Getränke kaufen können. Hierbei wählt der Mobikefefonbenutzer eine auf dem Getränkeautomaten angegebene Nummer, woraufhin dem Mobiltelefonbenutzer ein optischer Code zugesendet wird, der auf dem Display des Mobiltelefons zur Anzeige gebracht wird. Der Mobiltelefonbenutzer hält das Display seines Mobiltelefons vor eine im Getränkeautomaten befindliche Aufnahmeanordnung. Hierbei erfasst die Aufnahmeanordnung den optischen Code, der anschließend decodiert werden kann. Ist der optische Code gültig, erhält der Benutzer das gewünschte Getränk und der zu zahlende Betrag wird über die Telefonrechnung abgebucht.

Neben diesem konkreten Beispiel existiert eine Vielzahl anderer Bildaufnahmeanordnungen, welche der Erfassung eines optischen Codes dienen. Die meisten dieser Bildaufnahmeanordnungen arbeiten zufriedenstellend, sofern der optische Code als Markierung fest mit einer physikalischen Oberfläche verbunden ist. Hierunter zählen zum Beispiel aufgedruckte oder mit einem Laser in eine Oberfläche eingebrannte Codes. Die Geräte arbeiten zufriedenstellend, sofern die physikalische Oberfläche nicht spiegelt und/oder sofern die physikalische Oberfläche nicht zum Schutz von einer oder mehreren durchsichtigen Schichten überdeckt wird.

Die meisten dieser Anordnungen versagen jedoch bei einer Bildaufnahme von auf spiegelnd reflektierenden Oberflächen aufgebrachten Markierungen, von Markierungen, die hinter einer Glasscheibe angeordnet sind, sowie bei der Bildaufnahme von Markierungen, die an einem elektronischen Display angezeigt werden. Insbesondere versagen die meisten dieser Anordnungen bei einer Lesung von einem Liquid-Crystal-Display (LCD). Dies liegt zum einen daran, dass die meisten Displays zur Darstellung eines Bildes für einen menschlichen Benutzer optimiert sind und zum anderen daran, dass die physikalische Oberfläche des Displays einfallendes Licht reflektiert oder eine vor einem Display angeordnete durchsichtige Schicht einfallendes Licht reflektiert und durch das reflektierte Licht die Bildaufnahme negativ beeinträchtigt wird.

Um jedoch bei einer Bildaufnahme zum korrekten Erfassen des optischen Codes einen notwendigen Mindestkontrast sowie eine notwendige Mindestschärfe zu erzielen, ist in den meisten Anwendungsfällen eine Beleuchtung erforderlich, die frontal auf das Display auftrifft. Hierbei verursachen insbesondere die vorstehend schon erwähnten auf dem Display bzw. vor dem Display angeordneten durchsichtigen Schichten Reflexionen, die ebenfalls direkt in die Bildaufnahmeeinheit treffen und deshalb das von der Bildaufnahmeeinheit eigentlich aufzunehmende Bild überlagern.

Derartige Schichten sind beispielsweise die obere Deckschicht des eigentlichen LCD's, eine eventuell vorhandene Touchscreen-Folie - häufig bei Pocket-PC's, PDA's, Smartphone's und Communicators's eingesetzt - sowie gegebenenfalls ein oberes Schutzglas, mit welchem das LCD vor mechanischen Einflüssen geschützt wird. Insbesondere das obere Schutzglas ist hinsichtlich einer guten Bildaufnahme eines auf einem Display angezeigten Bildes als besonders problematisch anzusehen, da es zum einen meistens aus einem einfachen Kunststoff von minderer optischer Qualität gefertigt und zum anderen oftmals sehr dick ausgeführt ist, um hierdurch seine Schutzfunktion besonders gut wahrnehmen zu können. Darüber hinaus ist das obere Schutzglas häufig gewölbt, so dass die auf das gewölbte Schutzglas treffenden Lichtstrahlen vielseitig reflektiert werden.

Im Allgemeinen lassen sich die Reflexionen einer Beleuchtung nur sehr schlecht verringern bzw. vermeiden. Um jedoch die negativen Einflüsse dieser Reflexion im Hinblick auf ein aufgenommenes Bild zu verringern, wird bei bekannten Bildaufnahmeanordnungen häufig für eine sehr gleichmäßige diffuse Beleuchtung gesorgt. Im Idealfall verschwinden damit nahezu alle durch die Beleuchtung verursachten dem Bild überlagerten Artefakte. Hierbei kommt es dann lediglich zu einer gleichmäßigen allgemeinen Aufhellung des Bildes und einer damit einhergehenden Minderung des Kontrastes.

Dementsprechend bestehen bisher bekannte Anordnungen zur Aufnahme von Bildern von einem LCD aus einer Kamera, deren optische Achse mit der Normalen des Displays zusammenfällt, und einer koaxialen Beleuchtungseinrichtung, die das Display mit einem homogenen diffusen Licht von vorn beleuchtet. Darüber hinaus dürfen dazu verwendete physikalische Lichtquellen nicht im Strahlengang der bildaufnehmenden Kamera liegen, da sonst ein Teil des Bildes verdeckt würde. Ebenso wenig können die Lichtquellen sinnvoll hinter der Kamera angeordnet werden, da hierbei die Kamera zwischen der Lichtquelle und dem Display angeordnet wäre und das Display durch die Kamera zumindest teilweise abgeschattet würde. Hinsichtlich der bekannten Bildaufnahmeanordnungen wird daher als BeleuchLungseinrichLung eine virtuelle Lichtquelle im Strahlengang verwendet, die mittels eines teildurchlässigen Spiegels realisiert wird.

Ähnliche Bildaufnahmeanordnungen werden auch verwendet, wenn ein Bild von einer spiegelnd reflektierenden Fläche aufgenommen werden soll oder wenn die aufzunehmende Fläche von einer oder mehreren durchsichtigen Schichten überdeckt wird, so dass die spiegelnd reflektierende Oberfläche und/oder die Grenzfläche der lichtdurchlässigen Schichten wie ein Spiegel wirken. Dadurch "sieht" die Bildaufnahmeeinheit Spiegelbilder der umliegenden Bildaufnahmeanordnung, die sich mit dem aufzunehmenden Bild überlagern. Um diese Nachteile zu verringern, wird hierbei die Verwendung einer koaxialen, ein homogenes diffuses Licht ausstrahlenden Beleuchtungseinrichtung bevorzugt. Ein wesentlicher Nachteil dieser Anordnung besteht in den hohen Kosten für derart aufwendig konstruierte Beleuchtungseinrichtungen. Ein weiterer Nachteil der bekannten Anordnungen besteht außerdem in einer nicht-idealen Homogenität der Beleuchtung, die sich direkt im LCD, im Schutzglas oder einer anderen lichtreflektierfähigen Fläche spiegelt. Auch ist es nachteilig, dass die frontale Beleuchtung nahezu immer zu einer Minderung des Kontrastes führt, wodurch einerseits die erzielbare Bildqualität begrenzt und andererseits die korrekte automatische Erfassung eines im Bild befindlichen optischen Codes deutlich erschwert wird.

Außerdem müssen zum Erzielen der notwendigen Homogenität der Beleuchtung sogenannte Diffusoren eingesetzt werden, wodurch ein großer Teil der erzeugten Lichtenergie absorbiert und dementsprechend in Wärme umgesetzt wird. Herkömmliche Beleuchtungseinrichtungen arbeiten demzufolge mit einem schlechten Wirkungsgrad, da viel elektrische Energie benötigt und diese größtenteils in Wärme umwandelt wird.

Beispielsweise ist aus der WO 02/31749 A1 ein mobiler mit der Hand geführter Scanner bekannt, der mit seiner Optik über ein Objekt geführt wird und dabei Barcodes erkennen und einlesen soll. Der Scanner wird zum Erkennen und Einlesen des Barcodes über das Objekt gezogen, welches den Barcode aufweist.

In der US-Schrift US 6,036,095 ist ebenfalls ein mobiler handgehaltener Scanner beschrieben, welcher von einer Objektoberfläche einen Barcode erkennen und einlesen soll. Im Inneren des Scannergehäuses befindet sich eine Bildaufaahmeeinrichtung, deren optische Achse senkrecht auf eine Objektebene auftrifft. Um die einzuscannende Objektebene gegenüber der optischen Achse zu positionieren, wird der Scanner mit seiner Unterseite auf die Objektebene aufgelegt. Die optische Achse befindet sich hierbei in einem rechten Winkel lotrecht auf der ein zu scannenden Dokumentenebene.

In der Druckschrift US 5,789,732 ist eine Vorrichtung beschrieben, welche eine Einleseeinrichtung aufweist, um von einem LCD-Display einen Barcode zu ermitteln. Mittels dieser Vorrichtung ist ein bargeldloses Zahlen gut handhabbar.

Um Auflösungsverluste eines Dokumentes, welches vor eine Kamera gehalten wird, zu reduzieren, ist in der Druckschrift EP 0 984 319 A1 eine Kamera mit einer Vorrichtung beschrieben, bei welcher die Ausrichtung einer Linse und eines Detektors schrittweise geändert werden, sodass die Dokumentenoberfläche in verschiedenen Abschnitten des Dokuments fokussiert ist. Durch dieses schrittweise veränderte Fokussieren der Dokumentenoberfläche wird eine verbesserte Auflösung erzielt.

Der Erfindung liegt die Aufgabe zugrunde, ein Gerät bzw. eine Anordnung bereitzustellen, welche die Nachteile herkömmlicher Bildaufnahmean-ordnungen überwiegend vermeidet.

Die Aufgabe der Erfindung wird von einem Bildaufnahmegerät gemäß Anspruch 1 gelöst.

Mittels des erfindungsgemäßen Bildaufnahmegerätes wird eine besonders kostengünstige Möglichkeit bereitgestellt, um einerseits Bilder in einer hohen Kontrastgüte und Schärfe von einer spiegelnd reflektierenden Oberfläche und/oder von Flächen, die durch transparente Schichten überdeckt sind, aufzunehmen. Besonders vorteilhaft ist es hierbei, dass andererseits ein Bild von hoher Güte von einem Display, insbesondere von einem LC-Display, aufgenommen werden kann.

Dies ist besonders vorteilhaft, da zum einen immer mehr portable elektronische Geräte mit einem Display ausgestattet und zum anderen immer mehr portable elektronische Geräte mit derartigen Displays erfunden werden, mit welchen einem Benutzer Informationen in visueller Form präsentiert werden. Dies gilt insbesondere für mobile Telekommunikationsgeräte und für elektronische Taschencomputer. Beispielsweise haben sich bei den Mobiltelefonen inzwischen höher aufgelöste graphikfähige Displays - teilweise mit mehreren zehntausend Pixel - gegenüber ceilenorientierten alphanumerischen Displays durchgesetzt. Hierbei kommt nach wie vor bei den meisten Geräten als Display-Technologie die Flüssigkristall-Technologie, Liquid Crystal - LC, zum Einsatz, die in den letzten dreißig Jahren wesentlich weiter entwickelt wurde. Darüber hinaus besitzen beispielsweise Pocket-PC's und PDA's seit jeher graphische Displays. Mittlerweile existieren Zusatzmodule zu Pocket-PC's und PDA's, die zusätzlich zu ihrem ursprünglichen Einsatzzweck die Benutzung dieser Geräte als Mobiltelefon ermöglichen. Ebenso existieren inzwischen Mischformen zwischen Pocket-PCs, PDAs und Mobiltelefonen. Diese Mischformen werden oft als Smartphones oder Communicatoren bezeichnet. Auch bei Pocket-PCs, PDAs, Smartphones und Communicatoren werden bisher derartige Flüssigkristall-Displays verwendet.

Unter dem Begriff "Bildaufnahmeeinheit" versteht man im vorliegenden Zusammenhang alle Einrichtungen, die dazu geeignet sind, ein Bild digital aufzunehmen. Hierunter sind in der Regel Einrichtungen zu verstehen, die einen digitalen Aufnahmesensor zur Bildaufnahme aufweisen. Eine solche Bildaufnahmeeinheit kann darüber hinaus auch eine optische Einrichtung, wie beispielsweise eine Linse oder ein Objektiv, aufweisen. Hierbei dient die optische Einrichtung im Wesentlichen dazu, ein Abbild der von der Bildaufnahmeeinheit "gesehenen" Szene auf den Aufnahmesensor zu projizieren.

Unter der Bezeichnung "Bildanlagefläche" versteht man eine durchsichtige Einrichtung, an welche ein aufzunehmendes Bild angelegt oder zumindest davor positioniert wird, welches vorzugsweise auf einem Display oder auf einer spiegelnd reflektierenden Oberfläche abgebildet ist. In den meisten Anwendungsfällen dient die Bildanlagefläche gleichzeitig auch als Positionierhilfe, um das aufzunehmende Bild gegenüber der Bildaufnahmeeinheit einfach und exakt zu positionieren. Hierbei spielt es keine Rolle, ob das aufzunehmende Bild an das Bildaufnahmegerät herangeführt oder ob das Bildaufnahmegerät an das aufzunehmende Bild geführt wird.

Die Bildanlagefläche ist bevorzugt eben ausgebildet und ein Gehäusebestandteil eines Bildaufnahmegerätes. Sie ist vorteilhafter Weise aus einem reflexionsmindernden Material hergestellt wie beispielsweise aus einem Anti-Reflex-Glas. Neben einer bevorzugt "physikalisch" vorliegenden Bildanlagefläche kann es Ausführungsbeispiele geben, bei denen die Bildanlagefläche unmittelbar durch eine Positionierhilfe gebildet ist. Beispielsweise weist die Positionierhilfe einen Rahmen auf, an welchem ein Display gegenüber der Bildaufnahmeeinheit positioniert wird. Der Rahmen spannt hierbei eine "virtuelle" Fläche auf, die dann im Sinne der Erfindung eine Bildanlagefläche darstellt.

Die Bezeichnung "optische Achse" beschreibt vorliegend die Haupt-Blickrichtung der Bildaufnahmeeinheit. Die Haupt-Blickrichtung fällt hierbei in der Regel mit einer Symmetrieachse der optischen Einrichtung, wie etwa einer Linse oder eines Objektivs, der Bildaufnahmeeinheit zusammen. Die optische Achse stellt im Sinne der Erfindung eine Blickrichtung der Bildaufnahmeeinheit dar und unterliegt den Gesetzen der Strahlenoptik. Es versteht sich in diesem Zusammenhang, dass die optische Achse der Bildaufnahmeeinheit durch optische Elemente, wie beispielsweise Linsen, Prismen oder Spiegel, gebrochen oder umgelenkt werden kann.

Die optische Achse hat darüber hinaus im Sinne der Erfindung gegenüber der Flächennormalen der Bildanlagefläche einen Winkel α und verläuft im einfachsten Fall direkt zwischen der Bildaufnahmeeinheit und der Bildaufnahmefläche. Wird die optische Achse der Bildaufnahmeeinheit jedoch von einer optischen Einrichtung umgelenkt, so dass der mittlere Strahlengang erst hierdurch auf die Bildanlagefläche trifft, weist die optische Achse der Bildaufnahmeeinheit in dem Bereich zwischen der optischen Einrichtung und der Bildanlagefläche ebenfalls einen Winkel α gegenüber der Flächennormalen der Bildanlagefläche auf.

Unter der Bezeichnung "Flächennormale" versteht man eine gedachte Linie, die wie ein Lot auf die Bildanlagefläche gefällt ist. Vorzugsweise verläuft die Flächennormale im Sinne der Erfindung durch einen Punkt, in welchem die optische Achse auf die Bildanlagefläche oder auf ein vor die Bildaufnahmeeinheit gebrachtes Display trifft.

Unter dem Begriff "Display" versteht man neben der Vielzahl an LCD-Weiterentwicklungen, wie z. B. supertwisted nematic (STN), fast supertwisted nematic (FSTN), thin film diode (TFD), thin film transistor (TFT), low temperatur polysilicon (LTPS), darüber hinaus auch andere Display-Technologien, die keine Flüssigkeitskristalle sondern beispielsweise organische elektrolumineszente Materialien einsetzen. Nahezu alle heutigen, wie wahrscheinlich auch zukünftigen, Displays weisen ein durchsichtiges "Schutzglas" auf, das die darstellende Displayfläche überdeckt und die empfindlichen Teile des Displays vor einer mechanischen Beanspruchung und einer Verschmutzung schützt. Derartige Schutzgläser sind oft aus einem transparenten Kunststoff gefertigt seltener jedoch aus einem mineralischen Glas. Ebenso ist fast allen Displays gemein, dass der primäre Zweck darin besteht, ein Bild zu erzeugen, welches bei der direkten Betrachtung durch den Benutzer gut zu erkennen ist.

Im Sinne der vorliegenden Erfindung versteht man unter dem Begriff "Display" nicht nur eine digitale Datenanzeige, sondern darüber hinaus insbesondere auch spiegelnd reflektierende Oberflächen, die eine Information enthalten. Im Allgemeinen umfasst der Begriff "Display" jede Oberfläche eines Gegenstandes, die lesbare Informationen im Sinne der Erfindung aufweist. Hierbei spielt es keine Rolle, ob diese Oberflächen zusätzlich durch eine oder mehrere transparente Schutzschichten überdeckt sind. Es versteht sich, dass letztendlich auch weit weniger komplizierte Flächen, die eine aufzunehmende Information erhalten, mit der Bezeichnung Display erfasst werden, so dass es mit dem erfindungsgemäßen Bildaufnahmegerät möglich ist, von nahezu allen Flächen, die eine Information im Sinne der Erfindung enthalten, Bilder aufzunehmen.

Auf Grund der Tatsache, dass die Flächennormale in einem Winkel α zu der optischen Achse der Bildaufnahmeeinheit angeordnet ist, ist die Bildaufnahmeeinheit derart gegenüber der Bildanlagefläche, und damit auch gegenüber einem Display, angeordnet, dass auf die Bildanlagefläche bzw. auf das Display einfallende Lichtstrahlen, im Falle einer Reflexion nicht oder nur in einem unbedeutenden Maße von der Bildaufnahmeeinheit wahrgenommen bzw. "gesehen" werden. Demzufolge haben Reflexionen, die von der Bildanlagefläche oder einem Display ausgehen, keine negativen Auswirkungen auf das aufgenommene Bild. Somit werden mit dem erfindungsgemäßen Bildaufnahmegerät Bildaufnahmen von höherer Qualität erzielt als dies mit herkömmlichen Bildaufnahmeanordnungen der Fall ist, bei denen die Flächennormale und die optische Achse parallel zueinander verlaufen.

Darüber hinaus ermöglicht das erfindungsgemäße Bildaufnahmegerät eine Aufnahme schärferer und kontrastreicherer Bilder, insbesondere von Bildern von Displays portabler Geräte, vorzugsweise von LCDs, auch wenn das LCD einfallendes Licht stark reflektiert oder wenn das LCD von einer bzw. von mehreren transparenten spiegelnd reflektierenden Schichten überdeckt wird, die das einfallende Licht stark reflektieren.

Insbesondere bei derart widrigen Umständen verschafft das erfindungsgemäße Bildaufnahmegerät wesentliche Vorteile hinsichtlich der Lesbarkeit von optischen Codes von einem Display gegenüber bekannten Bildaufnahmeanordnungen.

Der Begriff "optischer Code" - oder nachfolgend auch "2D-Code" genannt umfasst hinsichtlich vorliegender Erfindung jegliche informationstragende Markierung, deren Information mit Mitteln des maschinellen Sehens, wie beispielsweise einem digitalen Aufnahmesensor, "gelesen" werden kann. Insbesondere versteht man unter einem derartigen Code eine sogenannte "Klarschrift"-Markierung, die auch unter der Bezeichnung "OCR"-Schrift bekannt ist.

Darüber hinaus ermöglicht die Anordnung eines Winkels α zwischen der optischen Achse der Bildaufnahmeeinheit und der Flächennormalen der Bildanlagefläche das Verwenden einer preiswert hergestellten Beleuchtungseinrichtung. Dies wird dadurch ermöglicht, dass die Beleuchtungseinrichtung innerhalb des Bildaufnahmegerätes so angeordnet wird, dass sich die prinzipiell unvermeidlichen Spiegelungen der Beleuchtungseinrichtung auf dem Display und/oder einem Schutzglas außerhalb des Sichtfeldes der Bildaufnahmeeinheit befinden.

Es ist bekannt, dass insbesondere Displays auf Basis einer LCD-Technologie hinsichtlich ihrer Ablesbarkeit eine winkelabhängige Charakteristik besitzen. Wesentliche Parameter, wie Kontrast und Schärfe, hängen stark vom Betrachtungswinkel der LCDs ab. In besonderem Maße gilt dies für reflektive LCDs ohne Hintergrundbeleuchtung, die vorwiegend in portablen Geräten eingesetzt werden. Nahezu jedes LCD besitzt einen optimalen Betrachtungswinkel, unter welchem ein hoher Kontrast, eine gute Schärfe und bei Farbdisplays zusätzlich eine hohe Farbtreue erzielt werden. Dies bedeutet jedoch, dass bei einer zu großen Abweichung des tatsächlichen Betrachtungswinkels von dem optimalen Betrachtungswinkel, das Display nicht mehr oder nur noch mit großen Schwierigkeiten ablesbar ist. Die tolerierbare Abweichung vom optimalen Betrachtungswinkel ist gerade bei portablen Geräten sehr gering und beträgt meistens plus/minus wenige 10°. Bei der üblichen Verwendung eines portablen Gerätes stellt dies auch keinen Nachteil dar, weil das Gerät vom Benutzer in der Hand gehalten wird und der Benutzer intuitiv einen günstigen Betrachtungswinkel einstellt. Um ein bequemes Arbeiten mit einem derartigen portablen Gerät zu ermöglichen, sind die LCDs für portable Geräte in der Regel so konstruiert, dass die optimale Betrachtungsrichtung nicht entlang der Normalen des Displays verläuft, sondern meistens mit der Normalen einen Winkel von ca. 15° bis 20° bildet.

Deshalb ist es vorteilhaft, wenn der Winkel α zwischen der optischen Achse der Bildaufnahmeeinheit und der Flächennormalen der Bildanlagefläche mehr als 2°, vorzugsweise mehr als 5°, beträgt.

Um eine bestmögliche Qualität hinsichtlich des aufgenommenen Bildes zu erreichen, ist es vorteilhaft, wenn der Winkel α weniger als 50° oder weniger als 35°, vorzugsweise weniger als 30°, beträgt.

Es wird angestrebt, in einem möglichst großen Bereich der Bildanlagefläche einen möglichst geringen Verlust an Kontrast und Schärfe in Kauf nehmen zu müssen. Daher ist es vorteilhaft, wenn die Bildaufnahmeeinheit einen Sichtwinkel β von weniger als 30°, vorzugsweise von weniger als 15°, aufweist. aufweist. Dies führt dazu, dass möglichst viele optische Strahlen mit einer nur geringen Abweichung in Richtung der optischen Achse verlaufen und somit zu einem geringeren Verlust an Kontrast und Schärfe. Das liegt daran, dass eine Bildaufnahme nur im Zentrum eines Sichtfeldes einer Bildaufnahmeeinheit, also im Wesentlichen in einem Bereich entlang der optischen Achse, exakt unter dem Winkel α und somit besonders gut erfolgt. An den Rändern des Sichtfeldes weicht jedoch die effektive Aufnahmerichtung um etwa die Hälfte des Sichtwinkels von der optischen Achse der Bildaufnahmeeinheit ab. Der Sichtwinkel β wird wesentlich durch die Brennweite der Bildaufnahmeeinheit bestimmt. Bei Verwendung einer langen Brennweite ergibt sich ein kleiner Sichtwinkel β; bei Verwendung einer kurzen Brennweite ergibt sich ein großer Sichtwinkel β. Um die schädlichen Auswirkungen eines großen Sichtwinkels β zu vermeiden, ist es demzufolge vorteilhaft, eine lange Brennweite zu verwenden. Die Brennweite der Bildaufnahmeeinheit ist im Sinne der Erfindung als lang zu bezeichnen, wenn sie mindestens so groß ist, wie das doppelte der Ausdehnung des Sensors der Bildaufnahmeeinheit. Demzufolge ist es vorteilhaft, wenn die Bildaufnahmeeinheit eine Brennweite aufweist, die mehr als doppelt so groß ist, vorzugsweise mehr als vier mal so groß ist, wie die Ausdehnung der maximalen Diagonalen eines Aufnahmesensors der Bildaufnahmeeinheit.

Besonders gute Bildaufnahmequalitäten werden erreicht, wenn der Winkel α mindestens halb so groß wie der Sichtwinkel β der Bildaufnahmeeinheit, vorzugsweise mindestens so groß wie der Sichtwinkel β der Bildaufnahmeeinheit, ist. Hierbei ist die Brennweite vorteilhafter Weise so lang gewählt, dass verhindert wird, dass sich die Bildaufnahmeeinheit an der Bildanlagefläche spiegelt, was eine deutliche Minderung der Qualität des aufgenommenen Bildes zur Folge hätte.

Um das Bildaufnahmegerät auch bei einer sehr lang gewählten Brennweite möglichst kompakt bauen zu können, ist es vorteilhaft, wenn zwischen der Bildaufnahmeeinheit und der Bildanlagefläche eine optische Einrichtung angeordnet ist, mittels welcher die Strahlengänge zwischen der Bildaufnahmeeinheit und der Bildanlagefläche vorteilhaft umgelenkt werden können.

Vorzugsweise ist die optische Einrichtung hierbei ein Spiegel, mit welchem die Strahlengänge zwischen der Bildanlagefläche und der Bildaufnahmeeinheit baulich sehr einfach umgelenkt werden können.

Es hat sich gezeigt, dass es vorteilhaft ist, ein abzulesendes Display, insbesondere hinsichtlich eines reflexiven Displays, bzw. einer abzulesenden spiegelnd reflektierenden Oberfläche kontrolliert zu beleuchten, um hierdurch bessere Aufnahmeergebnisse zu erzielen. Daher ist es vorteilhaft, wenn das Bildaufnahmegerät eine Beleuchtungseinrichtung aufweist. Es versteht sich, dass bei einer Umlenkung der Strahlengänge auch die optische Achse umgelenkt wird, und demzufolge unter dem Winkel α derjenige Winkel zu verstehen ist, den die möglicherweise umgelenkte optische Achse am Ort der Bildanlagefläche mit der Flächennormlen der Bildanlagefläche bildet.

In diesem Zusammenhang ist es vorteilhaft, wenn die Beleuchtungseinrichtung Leuchtdioden aufweist, da Leuchtdioden kostengünstig herzustellen sind, eine kleine Bauform aufweisen, mit einer niedrigen Spannung arbeiten, nur wenig Abwärme produzieren und eine sehr hohe Lebensdauer aufweisen.

Weiterhin ist es vorteilhaft, wenn das von der Beleuchtungseinrichtung ausgesandte Licht im Wesentlichen entlang des Strahlengangs der Bildaufnahmeeinheit verläuft.

Deshalb sieht eine Ausführungsvariante vor, dass die Leuchtmittel unmittelbar in der Nähe der Bildaufnahmeeinheit angeordnet sind. Durch eine derartige Anordnung der Leuchtmittel erzielt man, dass die emittierten Lichtstrahlen etwa im gleichen Winkel auf die Bildanlagefläche beziehungsweise auf ein zu lesendes Display treffen, unter welchem der Strahlengang der Aufnahmeeinheit verläuft und das Display von der Aufnahmeeinheit "gesehen" wird. Hierdurch ist eine Verminderung von Kontrast und Schärfe im aufgenommenen Bild gegenüber Licht, welches ansonsten unter einem anderen Winkel auftreffen würde, reduziert.

Insbesondere durch das erfindungsgemäße Anordnen der optischen Achse gegenüber einer Flächennormalen der Bildanlagefläche sowie die Wahl einer langbrennweitigen Bildaufnahmeeinheit wird erreicht, dass sich weder die Bildaufnahmeeinheit noch die Beleuchtungsmittel der Beleuchtungseinrichtung an einer zu lesenden Fläche spiegeln. Aus diesem Grund kann man auf eine teure homogene koaxiale Beleuchtungseinrichtung verzichten, die das Display mittels einer virtuellen Lichtquelle beleuchtet. Somit ist das Bildaufnahmegerät eine wirtschaftlich sehr interessante Alternative zu herkömmlichen Bildaufnahmeanordnungen.

Eine weitere Ausführungsvariante sieht vor, dass die Beleuchtungseinrichtung farbige Leuchtmittel, vorzugsweise farbige Leuchtdioden, aufweist.

Um eventuell vorhandenes Umgebungslicht oder Streulicht daran zu hindern, dass es auf die Bildanlagefläche fällt und ganz oder teilweise von dieser in die Bildaufnahmeeinheit reflektiert wird, ist es vorteilhaft, wenn das Bildaufnahmegerät eine optische Abschirmung aufweist, die außerhalb des Strahlengangs der Bildaufnahmeeinheit angeordnet ist. Damit die optische Abschirmung ihren Zweck optimal erfüllt, ist es vorteilhaft, wenn die optische Abschirmung zwischen der Bildanlagefläche und der Bildaufnahmeeinheit und/oder einer Beleuchtungseinrichtung angeordnet ist.

Besonders vorteilhaft ist es, wenn die optische Abschirmung eine lichtabsorbierende Oberfläche aufweist und die lichtabsorbierende Oberfläche vorzugsweise der Bildanlagefläche zugewandt ist. Die lichtabsorbierende Oberfläche ist hierbei vorzugsweise schwarz. Eine derart lichtabsorbierende Oberfläche ist vorteilhaft, da diese sich in der Bildanlagefläche beziehungsweise im Display oder im Schutzglas eines Displays spiegelt und das Spiegelbild das eigentlich von der Bildaufnahmeeinheit aufzunehmende Bild überlagert. Die lichtabsorbierende Oberfläche bewirkt hierbei jedoch lediglich ein schwarzes Spiegelbild, dessen Überlagerung mit der Bildanlagefläche keine schädliche Auswirkung auf die Qualität des aufgenommenen Bildes hat.

Darüber hinaus ist es vorteilhaft, wenn das Bildaufnahmegerät ein Gehäuse aufweist, bei welchem vorzugsweise Teilbereiche ein lichtdurchlässiges Material aufweisen. In erster Linie ist ein derartiges Gehäuse vorteilhaft, da es die vorstehend beschriebenen Bauteile und Einrichtungen vor von Außen einwirkenden physikalischen, insbesondere mechanischen, optischen und/oder elektrischen Einflüssen schützt. Hierbei ist es besonders vorteilhaft, Teile des Gehäuses aus lichtundurchlässigem und weitere Teile des Gehäuses aus lichtdurchlässigem Material zu fertigen. Es ist insbesondere vorteilhaft, den Teil des Gehäuses, der im Strahlengang der optischen Anordnung liegt, beispielsweise die Bildanlagefläche, als Fenster aus einem reflexionsmindernden Material auszubilden. Dadurch wird eine Verschlechterung der Qualität des aufgenommenen Bildes durch Reflexionen an den Grenzflächen des Fensters bzw. der Bildanlagefläche entgegengewirkt.

Darüber hinaus ist es vorteilhaft, wenn das Bildaufnahmegerät eine Positioniereinrichtung aufweist. Die bestimmungsgemäße Verwendung des Gerätes lässt sich erleichtern, wenn diejenige Seite des Gehäuses, welche im Strahlengang der optischen Anordnung liegt mit einer Positioniereinrichtung ausgestattet oder als Positionierhilfe ausgebildet ist. Im einfachsten Fall besteht die Positioniereinrichtung aus einer ebenen Fläche, die vor das Display gehalten wird oder an die das Display gedrückt wird. Somit ist es vorteilhaft, die Bildanlagefläche als Positioniereinrichtung auszubilden oder zumindest eine derartige Positioniereinrichtung in der Nähe der Bildanlagefläche anzubringen.

Besonders vorteilhaft ist es, wenn die Positioniereinrichtung ein Mittel zum Schutz eines Displays oder eines das Display beinhaltenden Gerätes umfasst. So dient beispielsweise ein um die Bildanlagefläche herum angeordnetes Polster aus einem nachgiebigen Material dazu, eine Beschädigung des direkt vor dem Sichtfenster bzw. der Anlagefläche gehaltenen Gerätes zu vermeiden. Darüber hinaus ist es vorteilhaft, dass mit einem solchen Polster seitlich auf ein Display auftreffendes Fremdlicht ferngehalten werden kann, wenn der Benutzer das Gerät mit dem Display leicht an das Polster der Positioniereinrichtung andrückt.

Dementsprechend ist es vorteilhaft, wenn die Positioniereinrichtung ein Polster aufweist, welches einen an die Positioniereinrichtung gebrachten Gegenstand vor einer Beschädigung schützt und welches darüber hinaus in Zusammenspiel mit dem Gegenstand die Bildaufnahmeeinheit gegenüber einem Umgebungslicht abschirmt.

Hierdurch wird vorteilhafter Weise auch ein an die Positioniereinrichtung gedrücktes Display oder eine an die Positioniereinrichtung gedrückte spiegelnd reflektierende Oberfläche gegenüber einem Umgebungslicht abschirmt.

Die Aufgabe der Erfindung wird ebenfalls von einem Verfahren zum Aufnehmen eines an einem Display visualisierten Bildes gelöst, bei welchem eine Bildaufnahmeeinheit während der Bildaufnahme schräg zu dem Display gehalten wird. Dadurch das die Bildaufnahmeeinrichtung "schräg" zu dem Display gehalten wird, wird das Display gegenüber einer Bildaufnahmeeinheit in einem Winkel gehalten, der dem optimalen Betrachtungswinkel beispielsweise eines LC-Displays entspricht oder diesem zumindest sehr nahe kommen kann. Daraus ergibt sich, dass die Bildaufnahmequalität des an dem Display visualisierten Bildes gegenüber herkömmlichen Bildaufnahmeverfahren wesentlich erhöht ist.

Im vorliegenden Zusammenhang bezieht der Begriff "Display", wie bereits vorstehend erläutert, auch spiegelnd reflektierende Oberflächen ein. Im Zusammenhang mit derartigen Oberflächen ist es vorteilhaft, wenn von dem Display reflektierte Strahlen, die im Strahlengang der Bildaufnahmeeinheit liegen von einer optischen Abschirmung absorbiert werden.

Durch das erfindungsgemäße Verfahren können wesentlich einfachere Beleuchtungseinrichtungen als bisher zum Ausleuchten eines Displays genutzt werden, wodurch das Verfahren gegenüber bekannten Bildaufnahmeverfahren wesentlich vereinfacht ist.

Um das Verfahren gegenüber Streulicht unempfindlicher zu gestalten, ist es vorteilhaft, wenn das Display im Wesentlichen an eine Bildanlagefläche angelegt wird, oder umgekehrt. Hierdurch wird zum einen erreicht, dass Umgebungslicht weitestgehend von dem Display ferngehalten werden kann und nicht bzw. nur sehr schlecht an das Display gelangt und von dem Display reflektiert wird. Somit ist unterbunden, dass eventuell die Bildaufnahme der Bildaufnahmeeinheit gestört wird. Zum anderen erzielt man hierdurch eine gute Positionierung des aufzunehmenden Bildes gegenüber der Bildaufnahmeeinheit oder umgekehrt.

Besonders gute Bildaufnahmeergebnisse lassen sich erzielen, wenn das Display während der Bildaufnahme durch Licht mit einer Wellenlänge zwischen 450 nm, vorzugsweise zwischen 500 nm und 600 nm, vorzugsweise mit 550 nm, beleuchtet wird.

Hierbei wurde gefunden, dass es vorteilhaft ist, wenn das Display von Lichtstrahlen angestrahlt wird, die im wesentlichen entlang des Strahlengangs der Bildaufnahmeeinheit verlaufen. Durch eine derartige Beleuchtung des Displays entlang des Strahlengangs der Bildaufnahmeeinheit erzielt man, dass das Licht im wesentlichen im gleichen Winkel auf das Display trifft, unter dem das Display von der Bildaufnahmeeinheit "gesehen" wird. Daraus ergibt sich der Vorteil, dass keine Verminderung von Kontrast und Schärfe im aufgenommenen Bild auftritt, wie es etwa bei einer Beleuchtung unter einem anderen Winkel der Fall ist.

Ist bei einer Verfahrensvarianten eine "physikalische" Bildanlagefläche nicht vorgesehen, so verläuft die optische Achse zwangsläufig zwischen einem Display und einer Bildaufnahmeeinheit oder einer optischen Einrichtung.

Darüber hinaus wird die Erfindung von einer Anordnung aus einer Bildaufnahmeeinheit und einem Display gelöst, bei welcher die optische Achse der Bildaufnahmeeinheit in einem Winkel α zu einer Flächennormalen des Displays angeordnet ist. Die Vorteile einer derartigen Anordnung wurden bereits im Zusammenhang mit dem erfindungsgemäßen Bildaufnahmegerät erläutert. Der Unterschied gegenüber dem Bildaufnahmegerät ist darin zu sehen, dass bei der erfindungsgemäßen Anordnung auf ein Gehäuse verzichtet werden kann. Daraus ergibt sich eine preisgünstige Alternative. Jedoch ist es aufgrund der offenen Bauweise der erfindungsgemäßen Anordnung von Vorteil, wenn diese für einen Einsatz auf einen automatisierten stationären Betrieb beschränkt wird. Beispielsweise werden Displays oder sonstige spiegelnd reflektierende Oberflächen automatisiert an die Bildaufnahmeeinheit der erfindungemäßen Anordnung gebracht. Oder die Anordnung wird in eine bereits bestehende Vorrichtung eingebaut.

Darüber hinaus ist die Verwendung des beschriebenen Bildaufnahmegerätes und die Verwendung der beschriebenen Anordnung zum Aufnehmen eines Bildes von einem Display, insbesondere von einem LC-Display oder einer spiegelnd reflektierenden Oberfläche, vorteilhaft.

Insbesondere ist die Verwendung des beschriebenen Bildaufnahmegerätes sowie die Verwendung der beschriebenen Anordnung besonders vorteilhaft zum Aufnehmen eines Bildes von einer Fläche, die von mindestens einer durchsichtigen Schicht überdeckt ist.

Vorteilhaft ist die Verwendung des beschriebenen Bildaufnahmegerätes und die Verwendung der beschriebenen Anordnung zum Lesen eines optischen Codes, der vorzugsweise auf einem Display oder einer spiegelnd reflektierenden Oberfläche dargestellt ist.

Beispielsweise sind die Oberflächen im Bereich von Getränkeverpackungen normalerweise glänzend, also spiegelnd reflektierend. Darüber hinausgehende Beispiele für eine spiegelnd reflektierende Oberfläche sind PET-Flaschen, Glasflaschen, Getränkedosen aus Blech und Getränkekartons sowie feuchtigkeitsresistente Etiketten.

Die hier beschriebene Erfindung eignet sich insbesondere zum Lesen von Markierungen auf Dosen und Flaschen. Die Einführung eines Pfandsystems für Einwegverpackungen erfordert die Markierung der bepfandeten Verpackungen, um Verpackungen, für die ein Pfand bezahlt wurde - bepfandet - von Verpackungen zu unterscheiden, für die kein Pfand bezahlt wurde - nicht bepfandet-.

Es ist vorteilhaft, wenn diese Markierung zusätzliche Informationen enthält, wie z. B. Informationen über den Pfandwert, das Material, den Hersteller und/oder den Abfüller, weil diese zusätzlichen Informationen den Ausgleich der Geldströme - Pfand-clearing - erleichtern oder sogar erst effektiv ermöglichen. Ein derartiger Ausgleich wird insbesondere dann notwendig, wenn Ausgabe und Rücknahme der Verpackungen an verschiedenen Stellen geschehen soll. Es kann sogar vorteilhaft sein, jede bepfandete Verpackung mit einer eindeutigen Kennung zu versehen und die Informationen über die einzelnen Verpackungen in einer Datenbank vorzuhalten.

Weiter ist es vorteilhaft, wenn eine Pfandmarkierung automatisiert erkannt bzw. gelesen werden kann. Eine Markierung, die nur von Menschen erkannt bzw. gelesen werden kann, nicht aber von Maschinen, würde die automatengestützle Rücknahme verhindern bzw. erschweren und einen enormen logistischen Aufwand beim Pfand-clearing erzeugen.

Es ist deshalb vorteilhaft, wenn die Pfandmarkierung einen optischen Code, beispielsweise einen DataMatrix-Code, enthält, der von einem Lesegerät gelesen werden kann. Die Erfindung ist vorteilhaft zur Lesung solcher Pfandmarkierungen geeignet, insbesondere auch hinsichtlich zylindrischer glänzender oder runder glänzender Oberflächen.

Ein weiterer Anwendungsbereich ergibt sich hinsichtlich mobiler Tickets bzw. einer Zugangskontrolle zu einem abgetrennten Bereich. Es ist möglich, Tickets für Großveranstaltungen, wie beispielsweise Konzerte, Sportereignisse, im Versandhandel, insbesondere über das Internet, zu kaufen. Die damit verbundenen Vorteile sind bekannt. Bisher werden auf diesem Weg Tickets in Form von materiellen Tickets meist auf dem Postweg zugestellt, weshalb zwischen Ticketverkauf und Veranstaltung einige Tage liegen müssen. Anstelle eines materiellen Tickets kann auch ein elektronisches Ticket in Form eines optischen Codes verwendet werden, der sich auf einem gewöhnlichen Handydisplay darstellen lässt. Ein solches elektronisches Ticket kann ohne Zeitverlust drahtlos übertragen werden. Somit kann man noch kurz vor Veranstaltungsbeginn beispielsweise von Zuhause aus Tickets kaufen, was sonst nur noch an der Abendkasse möglich wäre.

Darüber hinaus können im Eingangsbereich von Veranstaltungen erfindungsgemäße Codelesegeräte verwendet werden, um beispielsweise einen 2D-Code zu lesen. Der gelesene Code wird hierbei verifiziert, wobei überprüft wird, ob der Code ein gültiges Ticket repräsentiert. Nach erfolgreicher Überprüfung wird der Einlass zu der Veranstaltung gewährt. Hierbei kann es vorteilhaft sein, wenn das Codelesegerät Signalisierungsmittel, beispielsweise einen akustischen Tongeber, eine optische Anzeige oder einen elektrischen drahtgebundenen oder drahtlosen Ausgang aufweist, mit dem die Gültigkeit des Tickets signalisiert wird. Die Signalisierung über einen elektrischen drahtgebundenen oder drahtlosen Ausgang ist insbesondere dann vorteilhaft, wenn das Zugangssystem einen entsprechenden elektrischen drahtgebundenen oder drahtlosen Eingang aufweist. Das Codelesegerät kann dann dem Zugangssystem die Gültigkeit des Tickets signalisieren, woraufhin das Zugangssystem beispielsweise eine automatische Tür öffnet.

Ebenso ist es möglich, Codelesegeräte an einem anderen Ort als unmittelbar im Eingangsbereich einer Veranstaltung zu verwenden. In diesem Zusammenhang ist es vorteilhaft, wenn das Codelesegerät einen Drucker aufweist, oder mit einem Drucker verbunden ist. Mit einem solchen Codelesegerät wäre es möglich, das elektronische Ticket auf dem Handy-Display in ein gedrucktes Ticket zu tauschen. Im Eingangsbereich der Veranstaltung kann der Einlass dann aufgrund des gedruckten Tickets erfolgen.

Als eigentliches Ticket fungiert hier nicht der 2D-Code, sondern dessen Inhalt. Es ist deshalb für die Anwendung unerheblich, ob ein 2D-Code als Graphik, z. B. MMS verschickt wird oder ob nur der Codeinhalt verschickt wird und ein auf dem Handy ablaufendes Programm diesen Codeinhalt in einen 2D-Code umsetzt und auf dem Display zur Darstellung bringt.

Ebenso wäre es möglich, den Codeinhalt auf andere Weise als durch eine Darstellung auf dem Display und eine Bildaufnahme durch das Lesegerät zum Zugangssystem zu transportieren, z. B. mit einer Infrarot-Schnittstelle oder per SMS. Der Umweg über das Telefon-Display ist aber vorteilhaft, weil dieser Weg mit dem geringsten Aufwand seitens des Telefon-Nutzers verbunden ist.

Darüber hinaus ergeben sich Anwendungen im Bereich digitaler Gutscheine auf einem Handy. Die meisten Handy-Nutzer akzeptieren Werbung auf ihrem Handy nur, wenn damit direkte Vorteile für den Nutzer verbunden sind. Um diesen Nutzerkreis für die Werbung zu erschließen, ist es also notwendig, den Nutzern des Werbedienstes Vorteile einzuräumen, die er ohne die Nutzung des Dienstes nicht hätte.

Hierzu bietet es sich an, dem Nutzerkreis, der Werbung auf seinem Handy zulässt, zusammen mit der Werbung elektronische Gutscheine zuzusenden, die innerhalb gewisser Zeiträume in bestimmten Geschäften, wie beispielsweise Kinos, Theater usw., eingelöst werden können. Ein Gutschein kann z. B. spezielle Rabatte gewähren, Zugaben oder kleine Geschenke versprechen.

Vorteilhaft bei dieser Form von Werbung ist die verbesserte Effizienz. Zum einen ergibt sich aus der notwendigen Einverständniserklärung des Nutzers eine gute Übereinstimmung mit der Zielgruppe. Zum anderen ermöglichen zukünftige Lokalisierungsdienste eine Anpassung der Werbeaussendungen an den Aufenthaltsort der Nutzer.

Die Schwierigkeit beispielsweise im Handy gespeicherte elektronische Gutscheine einzulösen, also aus dem Handy "wieder heraus" zu bekommen, wird durch die Verwendung eines 2D-Codes als Gutschein und die Verwendung eines erfindungsgemäßen Lesegerätes am Ort der Einlösung gelöst. So ist es zum Beispiel möglich, dass jede Kasse eines teilnehmenden Warenhauses mit einem Lesegerät ausgestattet wird. Hierbei ist es vorteilhaft, wenn das Lesegerät über Anschlussmittel mit der Kasse verbunden ist. In besonderem Maße gilt das für Gutscheine, die einen Rabatt gewähren. Durch eine solche Verbindung ist es nämlich auf einfache Weise möglich, den Gutschein in das Kassensystem zu übertragen, und eine aufwendige Nachbuchung der Gutscheine von Hand zu vermeiden.

Gerade in einer Einführungsphase ist es aber auch möglich, dass nur ein Lesegerät oder wenige Lesegeräte an zentralen Stellen im Warenhaus installiert werden. Dieses Lesegerät wird zusammen mit einem Drucker in ein leicht zu bedienendes Gerät integriert. Der Nutzer hält das Handy mit dem 2D-Code vor das Lesegerät und erhält dafür einen "physikalischen" Gutschein, den er anschließend an einer Kasse einlösen kann. Hierbei ist es vorteilhaft, wenn der physikalische Gutschein einen Barcode aufweist, der von der Kasse gelesen und vom Kassensystem verarbeitet werden kann. Besonders vorteilhaft ist es bei dieser Vorgehensweise, dass das Kassenpersonal diese physikalischen Gutscheine genau so verarbeiten kann, wie herkömmliche Gutscheine, die beispielsweise in Zeitungsbeilagen abgedruckt sind. Aufwändige Nachschulungen des Kassenpersonals sind somit idealerweise nicht erforderlich.

Wurde der 2D-Code einmal gelesen und im System verwendet, beispielsweise zum Ausdrucken eines "physikalischen" Gutscheins, wird der 2D-Code bzw. die Information des 2D-Codes deaktiviert, so dass der Code nur einmal verwendet werden kann. Ist jedoch eine Mehrfachverwendung des Codes vorgesehen, kann dieser entsprechend länger aktiv bleiben.

Weitere Ziele, Vorteile und Eigenschaften vorliegender Erfindung werden anhand der Beschreibung anliegender Zeichnung erläutert, in welcher beispielhaft in den Figuren 4 bis 9 die erfindungsgemäße Anordnung und das erfindungsgemäße Bildaufnahmegerät dargestellt sind.

Der übersichLshalber sind hierbei gleichwirkende Bauteile bzw. gleichwirkende Baugruppen mit gleichen Bezugsziffern versehen.

Es zeigt
- Figur 1: eine schematische Ansicht einer Bildaufnahmeanordnung,
- Figur 2 und 3: jeweils eine schematische Ansicht einer Bildaufnahmeanordnung mit einer optischen Abschirmung,
- Figur 4: eine perspektivische Ansicht eines Codelesegerätes,
- Figur 5 und 6: jeweils eine perspektivische Ansicht eines Codelesegerätes im Zusammenspiel mit einem Mobiltelefon,
- Figur 7: eine schematische Seitenansicht des CodelesegeräLs aus den Figuren 4 bis 6 mit einer erfindungsgemäßen Bildaufnahmeanordnung,
- Figur 8: eine schematische Ansicht eines weiteren Codelesegerätes mit einem Bedienfeld, mit einem Display und mit einer Tastatur und
- Figur 9: ein Ausführungsbeispiel eines Gutscheins, der mittels des Codelesegerätes aus der Figur 8 erstellt wurde.

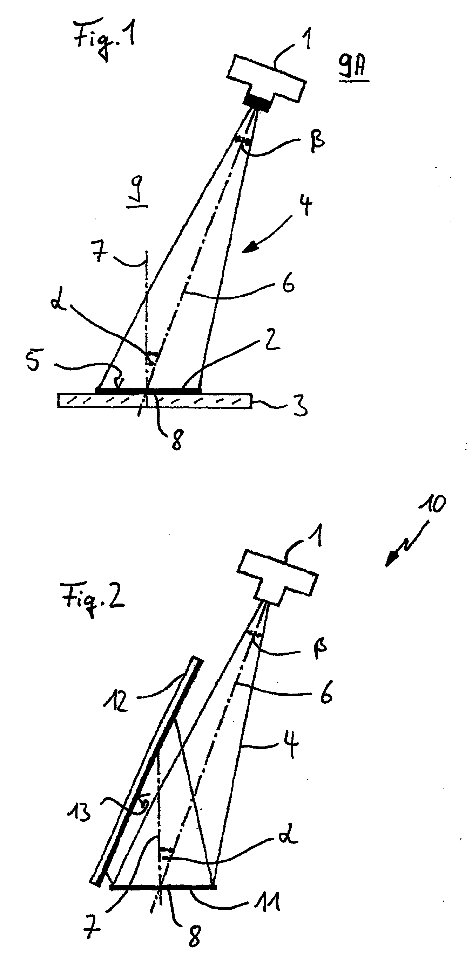

Das in der Figur 1 gezeigte Ausführungsbeispiel umfasst eine Bildaufnahmeeinheit 1, die gegenüberliegend einem Display 2 eines Pocket-PC 3 angeordnet ist. Die Bildaufnahmeeinheit 1 hat einen Strahlengang 4 mit einem Sichtwinkel β. Hierbei ist die Bildaufnahmeeinheit 1 derart gegenüber dem Display 2 angeordnet, dass der Strahlengang 4 das Display 2 nahezu vollständig erfasst, so dass die Bildaufnahmeeinheit 1 ein von dem Display 2 visualisiertes Bild 5 vollständig "sieht".

Die Bildaufnahmeeinheit 1 hat eine optische Achse 6, die mit einer Flächennormalen 7 einen Winkel α einschließt.

Die Flächennormale 7 verläuft senkrecht zu dem Display 2 durch einen Schnittpunkt 8, in welchem die optische Achse 6 auf das Display 2 trifft.

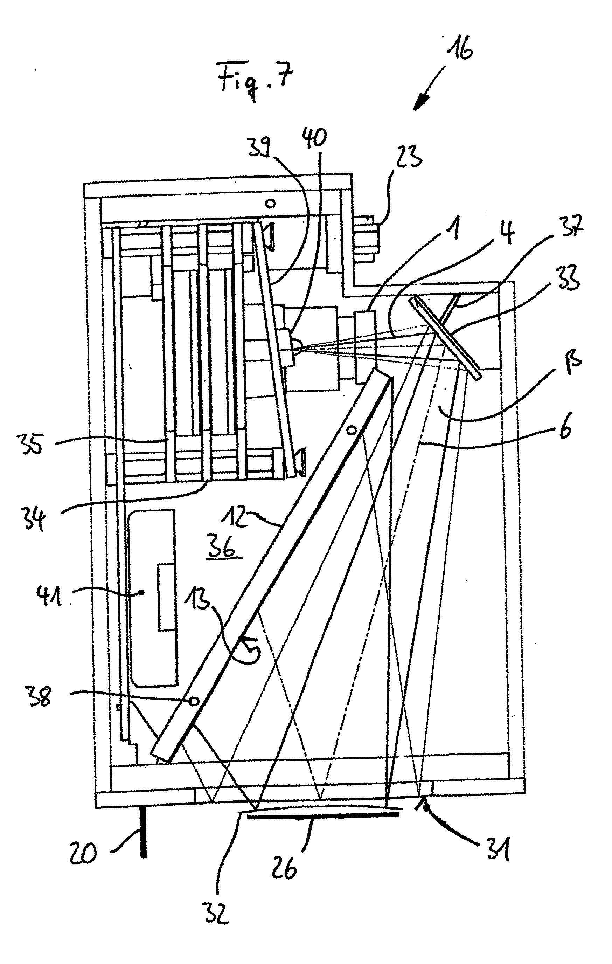

Spiegelt das Display 2 teilweise oder ist das Display 2 mit teilweise spiegelnden transparenten Schichten 32 (siehe Figur 7) überdeckt, setzt sich das von der Bildaufnahmeeinheit 1 aufgenommene Bild aus dem Abbild des Displays 2 bzw. des auf dem Display 2 visualisierten Bildes 5 und einem Abbild der Spiegelungen (hier nicht dargestellt) zusammen. Bei einer herkömmlichen Anordnung bei der die optische Achse 6 der Bildaufnahmeeinheit 1 mit der Normalen 7 zusammenfällt, spiegelt sich die Bildaufnahmeeinheit 1 zumindest teilweise im Display 2 oder in den das Display 2 überlagernden Schichten, infolge dessen das von der Bildaufnahmeeinheit 1 aufgenommene Bild ein "gespiegeltes" Abbild der Bildaufnahmeeinheit 1 enthält.

Bei der Anordnung 1 nach Figur 1 "sieht" die Bildaufnahmeeinheit 1 nicht sich selbst im Spiegelbild sondern "sieht" an seinem eigenen Spiegelbild vorbei. Stattdessen "sieht" die Bildaufnahmeeinheit 1 das Spiegelbild eines Bereits 9 der Szene, der sich neben der Bildaufnahmeeinheit 1 befindet. Besonders vorteilhaft ist dabei, dass ein Bereich 9A, in welchem die Bildaufnahmeeinheit 1 angeordnet ist, für die Bildaufnahme nicht verwendet wird.

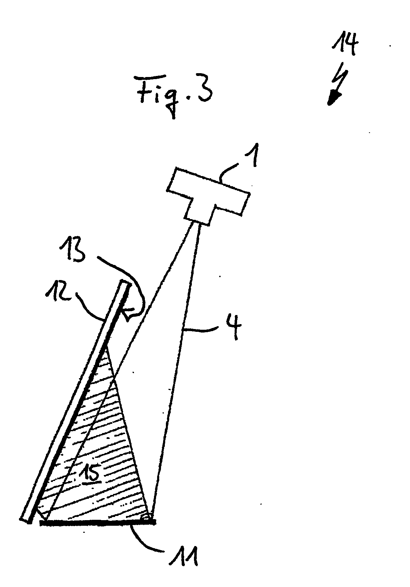

Vorteilhafter Weise lassen sich hierdurch in dem Bereich 9 weitere konstruktive Elemente vorsehen (siehe beispielsweise Figuren 2 und 3), mit welchen sich spiegelnde Effekte kontrollieren lassen. Insbesondere ist es vorteilhaft, in diesem freigewordenen Bereich 9, den die Bildaufnahmeeinheit 1 aufgrund von Spiegelungen "sieht", eine optische Abschirmung 12 (siehe Figuren 2 und 3) aus lichtundurchlässigem Material anzubringen.

Die in der Figur 2 gezeigte Anordnung 10 umfasst eine Bildaufnahmeeinheit 1 zur Aufnahme eines Bildes von einer spiegelnd reflektierenden Oberfläche 11. Auch in diesem Ausführungsbeispiel ist die Bildaufnahmeeinheit 1 durch eine optische Achse 6 und einen Strahlengang 4 mit einem Sichtwinkel β gekennzeichnet, wobei die optische Achse 6 im Schnittpunkt 8 auf die spiegelnd reflektierende Oberfläche 11 trifft. Von diesem Schnittpunkt 8 ausgehend verläuft eine Flächennormale 7 senkrecht zur Oberfläche 11 und hat einen Winkel α zur optischen Achse 6.

Darüber hinaus weist die Anordnung 10 eine optische Abschirmung 12 auf, die mit einer lichtabsorbierenden schwarzen Oberfläche 13 versehen ist- Hierdurch werden Spiegelungen unterbunden, welche die Bildaufnahmequalität mindern können. Die lichtabsorbierende Oberfläche 13 erscheint selbst dann "schwarz", wenn sie beleuchtet wird. Dies führt vorteilhafter Weise zu keiner von der Bildaufnahmeeinheit 1 sichtbaren Spiegelung.

Die in der Figur 3 gezeigte Anordnung 14 weist eine Bildaufnahmeeinheit 1 vor einer spiegelnd reflektierenden Oberfläche 11 mit einer optischen Abschirmung 12 auf. Es ist vorteilhaft, den hier eingezeichneten schraffierten Bereich 15 von Lichtquellen freizuhalten, da in diesem Bereich 15 angeordnete Lichtquellen schädliche Spiegelungen im aufgenommenen Bild bewirken würden. Darüber hinaus ist der schraffierte Bereich 15 auch der einzige Bereich, von dem aus Lichtstrahlen durch Spiegelung an die spiegelnd reflektierende Oberfläche 11 und somit in die Bildaufnahmeeinheit 1 gelangen.

Durch die hier beschriebene Anordnung 14 wird ein großes Maß an konstruktiver Freiheit gewonnen. Insbesondere können zusätzliche Beleuchtungseinrichtungen 39 (siehe Figur 7) an nahezu beliebiger Stelle innerhalb der Bildaufnahmeanordnung 14 angebracht werden, ohne störende Reflexionen auf der spiegelnd reflektierenden Oberfläche 11 zu erzeugen. Ein weiterer Vorteil besteht in der deutlich verbesserten Toleranz gegenüber von außen einfallendem Fremdlicht.

Das in den Figuren 4 bis 6 gezeigte erfindungsgemäße Codelesegerät 16 umfasst das Funktionsprinzip der in den Figuren 1 bis 3 beschriebenen Anordnungen 10 und 14. Das Codelesegerät 16 umfasst ein Gehäuse 17, welches einen hervorragenden Schutz vor äußeren Einflüssen bietet.

Die Vorderseite 18 des Codelesegerätes 16 ist teilweise aus einem Anti-Reflex-Glas-Fenster 19 hergestellt. Der übrige Bereich der Seite 18 umfasst zumindest teilweise eine Positionierhilfe 20. Des weiteren weist das Codelesegerät 16 mechanische Befestigungsmittel 21 und 22 sowie elektrische Anschlussmittel 23 auf.

Die mechanischen Befestigungsmittel 21 und 22, die hier beispielhaft als Innengewinde ausgeführt sind, ermöglichen eine problemlose Befestigung an anderen Objekten sowie einen problemlosen Einbau in andere Geräte wie beispielsweise Verkaufsautomaten oder Zugangskontrollsystemen.

Die elektrischen Anschlussmiltel 23 dienen der Versorgung des Gerätes mit elektrischer Energie und dem elektronischen Austausch von Daten. Insbesondere ist es möglich, über das elektrische Anschlussmittel 23 Informationen vom Codelesegerät 16 an ein Peripheriegerät (hier nicht dargestellt) zu schicken. Solche Informationen können beispielsweise das von der Bildaufnahmeeinheit 1 (siehe beispielsweise Figuren 1 bis 3) aufgenommene Bild, der Inhalt eines vom Codelesegerät 16 dekodierten Codes oder Statusmeldungen des Codelesegerätes 16 sein. Es ist aber ebenso möglich, Informationen von der Peripherie an das Codelesegerät 16 zu senden. Damit wird es möglich, das Codelesegerät 16 von Außen zu parametrieren und zu warten oder im Codelesegerät 16 enthaltene optische und akustische Signalgeber 41 (siehe Figur 7) anzusteuern.

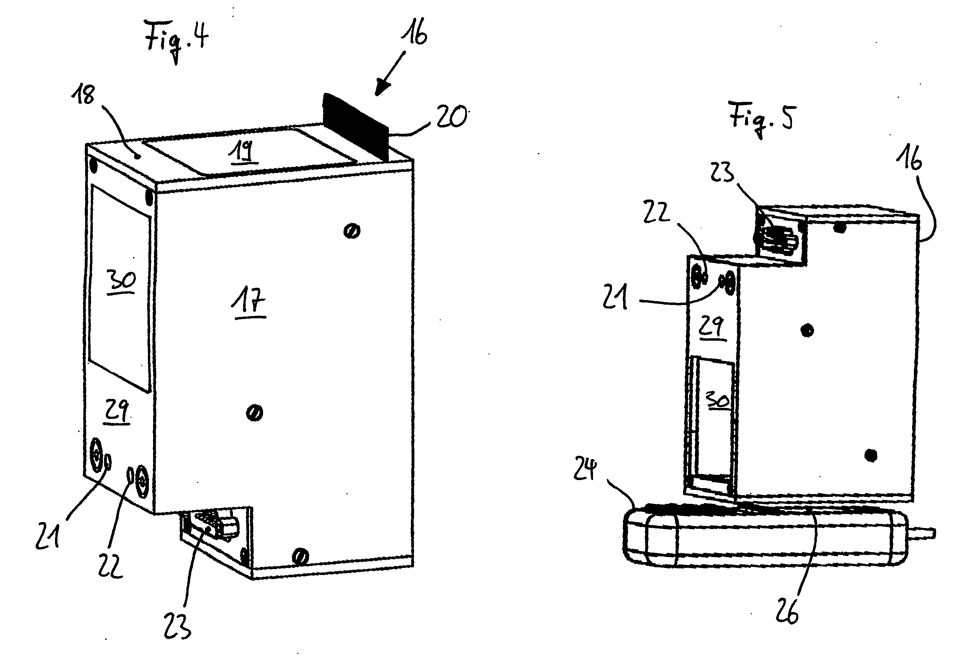

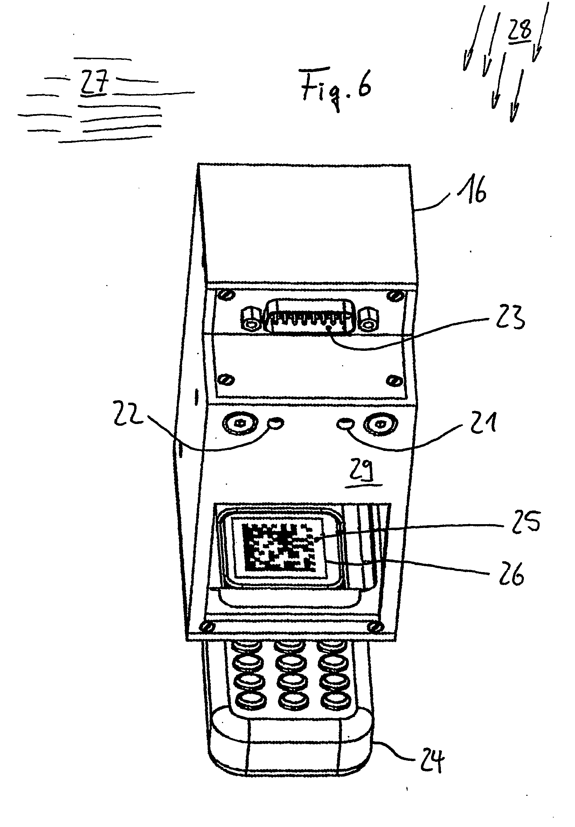

Vor dem Codelesegerät 16 kann ein Mobiltelefon 24 (siehe Figuren 5 und 6) angeordnet werden. Hierbei wird das Codelesegerät 16 dazu verwendet, einen optischen Code 25, der auf einem LCD 26 des Mobiltelefons 24 angezeigt wird, abzulesen. Die hier angedeutete senkrechte Einbaulage einer Anordnung 10, 14 ist insbesondere bei der Verwendung des Codelesegerätes 16 in Außenbereichen 27 vorteilhaft, weil dort mit hellem Umgebungslicht gerechnet werden muss, welches vorwiegend von oben nach unten abgestrahlt wird. Durch die senkrechte Einbaulage wird somit eine störende direkte Sonnenlichteinstrahlung 28 auf die Bildaufnahmeeinheit 1 vermieden.

Zum Lesen des Codes 25 hält ein Benutzer das Display 26 des Mobiltelefons 24 unter das Codelesegerät 16 und vor das Fenster 19 des Codelesegeräts 16. Dabei wird der Benutzer durch die Positioniereinrichtung 20 insofern unterstützt, dass durch das Anlegen des Mobiltelefons 24 an die Positioniereinrichtung 20 automatisch ein günstiger Winkel zwischen dem LCD 26 und der optischen Achse 6 der Bildaufnahmeeinheit 1 eingestellt wird. Beim Lesen des Codes 25 wird der Codeinhalt über das elektrische Anschlussmittel 23 an ein übergeordnetes System (hier nicht dargestellt) übermittelt, das die weitere Verarbeitung des Codeinhaltes übernimmt.

Um das Positionieren noch weiter zu vereinfachen, weist die dem Benutzer zugewandte Seite 29 einen weiteren transparenten Bereich 30 auf. Der Benutzer sieht durch diesen Bereich 30 auf das LCD 26 des Mobiltelefons 24. Hierdurch wird das Positionieren wesentlich erleichtert. Letztlich kann das Positionieren noch durch eine akustische und optische Signalisierung unterstützt werden, die dem Benutzer eine Rückmeldung angibt, sobald der zu lesende optische Code 25 gelesen wurde. Dabei kann diese Signalisierung direkt am bzw. im Codelesegerät 16 oder durch ein übergeordnetes System (hier nicht dargestellt) erfolgen, welches über das Anschlussmittel 23 mit dem Codelesegerät 16 kommuniziert. Bei herkömmlichen Anordnungen würde ein weiterer transparenter Bereich 30 schädliche Auswirkungen auf die Qualität des aufgenommenen Bildes haben, weil durch diese Öffnung von außen einfallendes Fremdlicht vom Display 26 in die Bildaufnahmeeinheit 1 (siehe Figuren 1 bis 3) gespiegelt würde. Bei der vorliegenden Anordnung wird hingegen durch den transparenten Bereich 30 eventuell von außen einfallendes Licht vom Display 26 lediglich auf die lichtabsorbierende Oberfläche 13 der optischen Abschirmung 12 (siehe Figuren 2 und 3) gespiegelt, wo es absorbiert und somit für die Bildaufnahme unschädlich gemacht wird.

In dem Codelesegerät 16 ist eine Bildaufnahmeeinheit 1 beabstandet gegenüber einer Bildanlagefläche 31 angeordnet. Die Bildaufnahmeeinheit 1 nimmt den Code 25 des LCD 26 auf. Hierbei ist das LCD 26 mittels eines Schutzglases 32 des Mobiltelefons 24 geschützt.

Die Verwendung eines kleinen Sichtwinkels β der Bildaufnahmeeinheit 1 ist vorteilhaft für die Aufnahme eines Bildes, führt aber zu einer großen Bauform des Codelesegerätes 16. Um die Bauform des Codelesegerätes 16 klein zu halten, wird der Strahlengang 4 der Bildaufnahmeeinheit 1 durch einen Spiegel 33 umgelenkt. Hierdurch ist des möglich, die Bildaufnahmeeinheit 1 zusammen mit anderen konstruktiven Bestandteilen des Codelesegerätes 16 anzuordnen. Beispielsweise werden eine Bildverarbeitungseinheit 34 und eine Verbindungseinheit 35 sowie ein Signalgeber 41 in einem freien Bereich 36 hinter der optischen Abschirmung 12 angeordnet.

Ein weiterer Vorteil der Umlenkung des Strahlengangs 4 durch einen Spiegel 33 besteht darin, dass nahezu alle Bauteile rechtwinklig in einem rechtwinkligen Gehäuse 17 angebracht werden können, was den konstruktiven Aufwand wesentlich verringert. Lediglich für den Spiegel 33 und die optische Abschirmung 12 sind schiefwinklige Befestigungen 37 und 38 erforderlich. Besonders vorteilhaft ist es, wenn der Spiegel 33 und die optische Abschirmung 12 bereits bei der Fertigung des Gehäuses 17 eingebaut werden.

Die Bildaufnahmeanordnung 10, 14 (siehe Figuren 2 und 3) innerhalb des Codelesegerätes 16 weist zusätzlich eine Beleuchtungseinrichtung 39 auf, die zur Beleuchtung des LCDs 26 Leuchtdioden 14 umfasst. Hierbei sind die Leuchtdioden 40 in unmittelbarer Nähe der Bildaufnahmeeinheit 1 angeordnet und strahlen Licht im wesentlichen in Richtung des Strahlengangs 4 der Bildaufnahmeeinheit 1 ab.

Die Anordnung der Leuchtdioden 40 in unmittelbarer Nähe zur Bildaufnahmeeinheit 1 ist für die Bildaufnahme vorteilhaft. Durch die Nähe zur Bildaufnahmeeinheit 1 und die Abstrahlung des Lichts in Richtung des Strahlengangs 4 der Bildaufnahmeeinheit 1 wird das von dem LCD 26 oder von einem überdeckenden Schutzglas 32 reflektierte Licht auf die optische Abschirmung 12 mit der absorbierenden Oberfläche 13 gelenkt und kann daher keine schädlichen Wirkungen entfalten. Insbesondere bei LCDs 26 ergibt sich als weiterer Vorteil eine verbesserte Schärfe, weil Parallaxenfehler durch unterschiedliche Sicht- und Beleuchtungswinkel vermieden werden.

Es kann vorteilhaft sein, die Beleuchtungseinrichtung 39 so anzuordnen, dass die Hauptausleuchtungsrichtung leicht von der optischen Achse 6 der Bildaufnahmeeinheit 1 abweicht. Dies liegt daran, dass nicht alle Bereiche des LCDs 26 die gleiche Entfernung zu den Leuchtkörpern 40 haben und deshalb unterschiedlich stark beleuchtet werden. Bei dem in diesem Ausführungsbeispiel gezeigten Codelesegerät 16 wird dieser Effekt durch leichtes Verkippen der Beleuchtungseinrichtung 39 kompensiert, so dass man ein gleichmäßig ausgeleuchtetes LCD erhält. Die Leuchtdioden in diesem Ausführungsbeispiel senden gelbes und grünes Licht aus. Dies ist vorteilhaft, weil viele LCDs 26 bei dieser Lichtfarbe den höchsten Kontrast aufweisen.

Das Codelesegerät 16 umfasst darüber hinaus einen akustischen Signalgeber 41, mit welchem ein Lesen des optischen Codes 25 signalisiert wird. Der Signalgeber 41 kann direkt vom Codelesegerät 16, also autark, oder über das elektrische Anschlussmittel 23 angesteuert werden.

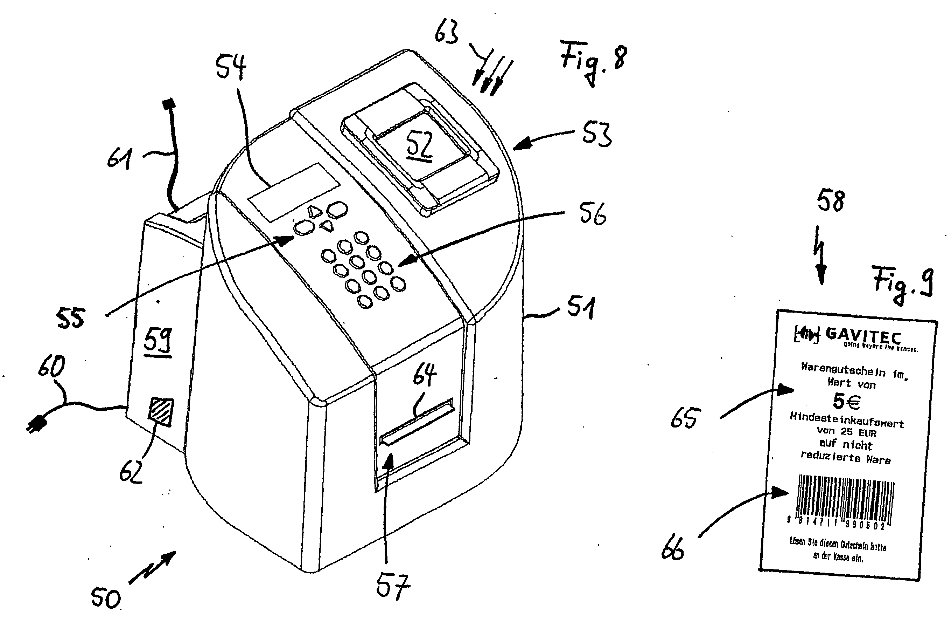

Das in der Figur 8 demonstrierte Codelesegerät 50 zum Einlesen eines optischen Codes 25 (siehe Figur 6) weist ein Gehäuse 51 auf, an welchem ein Lesefenster 52, eine Positionierhilfe 53, eine optische Ausgabeeinheit 54, ein Bedienfeld 55, eine Tastatur 56 sowie ein Bon-Drucker 57, beispielsweise zum Erstellen eines Gutscheines 58 (siehe Figur 9), angeordnet sind. Darüber hinaus weist das Codelesegerät 50 an seiner Rückseite 59 diverse Anschlussmittel auf. Beispielsweise verfügt das Codelesegerät 50 über einen Anschlusskabel 60, mit welchem das Codelesegerät mit Energie versorgt wird. Des Weiteren weist das Codelesegerät 50 einen Anschluss 61 auf, über welchen es mit einen Ethernet verbunden werden kann. Außerdem umfasst das Codelesegerät 50 eine Bluetooth-Schnittstelle 62, mit welcher eine drahtlose Verbindung zu einen Backoffice-System (hier nicht dargestellt) aufbaugebaut werden kann. Es versteht sich, dass eine derartig drahtlose Verbindung neben einer Bluetooth-Schnittstelle 62 beispielsweise auch über eine GPRS- oder W-Lan-Schnittstelle (hier nicht dargestellt) realisiert werden kann. Dementsprechend kann das Anschlussmittel 61 auch mittels eines RS232-Standarts realisiert sein. Insbesondere ist es möglich, von dem Backoffice-System aus das Codelesegerät 50 zu konfigurieren, zu warten und/oder statistische Daten abzufragen.Um nun einen optischen Code 25 (siehe Figur 6) von einen Display 26 eines Mobiltelefons 24 einlesen zu können, wird das LCD-Display 26 vor das Lesefenster 52 des Codelesegerätes 50 gehalten. Um ein Display 26 bzw. eine Oberfläche eines Gegenstandes, die einen einzulesenden optischen Code aufweist, besonders einfach vor dem Lesefenster 52 positionieren zu können, ist das Lesefenster 52 von der Positionierhilfe 53 umrandet. Die Positionierhilfe 53 besteht in diesem Ausführungsbeispiel aus einem relativ weichen Kunststoff, der das an die Positionierhilfe 53 gedrückte Display 26 nicht beschädigt. Die Positionierhilfe 53 dient bei dem an dem Lesefenster 52 angedrückten Display 26 darüber hinaus auch als Schutzmittel gegenüber einem Umgebungslicht 63, sodass das Einlesen des Codes 25 von dem Display 26 möglichst nicht von dem zusätzlich einfallenden Umgebungslicht 63 behindert wird.

Links vom Lesefenster 52 befindet sich die optische Ausgabeeinheit 54, das Bedienfeld 55 und die Tastatur 56. An der optischen Ausgabeeinheit 54 können Benutzerhinweise und Statusmeldungen, wie z. B. "Bitte legen Sie Ihr Handy-Display auf das Lesefenster", "Bitte geben Sie Ihre PIN auf der Tastatur ein", "Ungültiges Ticket", "Bitte warten, Ihr Coupon wird gedruckt", "Coupon wurde bereits eingelöst", "Kein Papier" oder "Außer Betrieb", dargestellt werden.

Über die Tastatur 56 können Autorisierungsdaten, wie beispielsweise eine PIN, eingegeben werden. Mittels der Tastatur 56 ist es möglich, dass das Bedienpersonal das Codelesegerät 50 auf einen bestimmten Anwendungsmodus programmiert. Hierbei ist es vorteilhaft, wenn sich das Bedienpersonal zuvor an dem Codelesegerät 50 autorisieren muss. Dies kann beispielsweise durch Eingabe einer System-PIN über die Tastatur 56 oder durch einen optischen Code über das Lesefenster 52 geschehen. Beispielsweise wird das Codelesegerät 50 von dem Bedienpersonal - in einer ähnlichen Weise, wie es heute bei Handys üblich ist - mittels der Tastatur 56 und der optischen Ausgabeeinheit 54 menügeführt konfiguriert.

Mittels des Bon-Druckers 57 wird ein physikalischer Gutschein 58 oder ein sonstiges Ticket ausgedruckt. Der Gutschein 58 wird hierbei über einen Ausgabeschlitz 64 des Bon-Druckers 57 aus dem Codelesegerät 50 ausgegeben.

Der in diesem Ausführungsbeispiel ausgegebene Gutschein 58 (siehe Figur 9) weist neben einer Beschreibung 65 zur Verwendung des Gutscheines auch einen Barcode 66 auf. Der Barcode 66 kann beispielsweise an einer Kasse (hier nicht dargestellt) zusammen mit einem zu kaufenden Produkt (hier nicht dargestellt) eingescant werden, wodurch das Kassensystem beispielsweise eine Gutschrift des Gutscheins 58 mit dem Kaufpreis des Produkts verrechnet.

Es versteht sich, dass die vorstehend beschriebenen Codelesegeräte 16 und 50 sowie die im Zusammenhang mit der Erfindung beschriebenen Anordnungen lediglich erste Ausführungsbeispiele vorliegender Erfindung darstellen und in keiner Weise einschränkende Wirkungen auf die Erfindung haben.

## Patentansprüche

1. Bildaufnahmegerät (16) zur Aufnahme von 2-dimensionalen Bildern mit einer Bildaufnahmeeinheit (1) und einer Bildanlagefläche (31), bei dem die optische Achse von der Bildaufnahmeeinheit durch die Bildanlagefläche zum Bild geht, ***dadurch gekennzeichnet, dass*** die Bildaufnahmeeinheit so angeordnet ist, dass der Strahl ihrer optischen Achse (6) in dem Bereich, in dem er auf das aufzunehmende Bild trifft, in einem Winkel a von mehr als 5° gegenüber einer Flächennormale (7) der Bildanlagefläche (31) verläuft.

2. Bildaufnahmegerät (16) nach Anspruche 1, ***dadurch gekennzeichnet, dass*** der Winkel a weniger als 50° oder weniger als 35°, vorzugsweise weniger als 30°, beträgt.

3. Bildaufnahmegerät (16) nach einem der Ansprüche 1 bis 2, ***dadurch gekennzeichnet, dass*** die Bildaufnahmeeinheit (1) einen Sichtwinkel b von weniger als 30°, vorzugsweise von weniger als 15°, aufweist.

4. Bildaufnahmegerät (16) nach einem der Ansprüche 1 bis 3, ***dadurch gekennzeichnet, dass*** die Bildaufnahmeeinheit (1) eine Brennweite , aufweist, die mehr als doppelt so groß ist, vorzugsweise mehr als vier mal so groß ist, wie die Ausdehnung der maximalen Diagonalen eines Aufnahmesensors der Bildaufnahmeeinheit (1).

5. Bildaufnahmegerät (16) nach einem der Ansprüche 1 bis 4, ***dadurch gekennzeichnet, dass*** der Winkel a mindestens halb so groß wie der Sichtwinkel b der Bildaufnahmeeinheit (1), vorzugsweise mindestens so groß wie der Sichtwinkel b der Bildaufnahmeeinheit (1), ist.

6. Bildaufnahmegerät (16) nach einem der Ansprüche 1 bis 5, ***dadurch gekennzeichnet, dass*** zwischen der Bildaufnahmeeinheit (1) und der Bildanlagefläche (31) eine optische Einrichtung (33) angeordnet ist.

7. Bildaufnahmegerät (16) nach einem der Ansprüche 1 bis 6, ***gekennzeichnet durch*** eine Beleuchtungseinrichtung (39).

8. Bildaufnahmegerät (16) nach Anspruch 7, ***dadurch gekennzeichnet, dass*** die Beleuchtungseinrichtung (39) als Leuchtmittel Leuchtdioden (40) aufweist.

9. Bildaufnahmegerät (16) nach Anspruch 8, ***dadurch gekennzeichnet, dass*** die Leuchtmittel unmittelbar in der Nähe der Bildaufnahmeeinheit (1) angeordnet sind.

10. Bildaufnahmegerät (16) nach einem der Ansprüche 7 bis 9, ***dadurch gekennzeichnet, dass*** die Beleuchtungseinrichtung (39) farbige Leuchtmittel, vorzugsweise farbige Leuchtdioden (14), aufweist.

11. Bildaufnahmegerät (16) nach einem der Ansprüche 1 bis 10, ***gekennzeichnet durch*** wenigstens eine optische Abschirmung (12), die außerhalb eines Strahlengangs (4) der Bildaufnahmeeinheit (1) angeordnet ist.

12. Bildaufnahmegerät (16) nach Anspruch 11, ***dadurch gekennzeichnet, dass*** die optische Abschirmung (12) zwischen der Bildanlagefläche (31) und der Bildaufnahmeeinheit (1) und/oder einer Beleuchtungseinrichtung (39) angeordnet ist.

13. Bildaufnahmegerät (16) nach einem der Ansprüche 11 oder 12, ***dadurch gekennzeichnet, dass*** die optische Abschirmung (12) eine lichtabsorbierende Oberfläche (13) aufweist und die lichtabsorbierende Oberfläche der Bildanlagefläche (31) zugewandt ist.

14. Bildaufnahmegerät (16) nach einem der Ansprüche 1 bis 13, ***gekennzeichnet durch*** ein Gehäuse (17), bei welchem vorzugsweise Teilbereiche ein lichtdurchlässiges Material aufweisen.

15. Bildaufnahmegerät (16) nach Anspruch 14, ***dadurch gekennzeichnet, dass*** das lichtdurchlässige Material ein reflexionsminderndes Material, vorzugsweise ein Anti-Reflex-Glas, ist.

16. Bildaufnahmegerät (16) nach einem der Ansprüche 1 bis 15, ***gekennzeichnet durch*** eine Positioniereinrichtung (20).

17. Bildaufnahmegerät (16) nach Anspruch 16, ***dadurch gekennzeichnet, dass*** die Positioniereinrichtung (20) ein Schutzmittel, vorzugsweise ein Polster, aufweist, welches einen an die Positioniereinrichtung (20) gebrachten Gegenstand vor einer Beschädigung schützt und welches darüber hinaus in Zusammenspiel mit dem Gegenstand die Bildaufnahmeeinheit (1) gegenüber einem Umgebungslicht (28) abschirmt.

18. Verwendung eines Bildaufnahmegerätes (16) nach einem der Ansprüche 1 bis 17 zum Aufnehmen eines Bildes von einer Fläche, die von mindestens einer durchsichtigen Schicht (32) überdeckt ist.

19. Verwendung eines Bildaufnahmegerätes (16) nach einem der Ansprüche 1 bis 17 zum Lesen eines optischen Codes (25), der auf einem Display (2; 26) oder einer spiegelnd reflektierenden Oberfläche (11) dargestellt ist.

## Claims

1. An image acquisition apparatus (16) for acquiring two-dimensional images with an image acquisition unit (1) and an image support surface (31) in which the optical axis passes from the image acquiring unit through the image support surface to the image, ***characterized in that*** the image acquiring unit is disposed so that the beam of its optical axis (6) is inclined at an angle a of more than 5° with respect to a surface normal (7) of the image support surface (31) in the region in which said beam impinges on the image to be acquired.

2. The image acquisition apparatus (16) as set forth in claim 1, ***characterized in that*** the angle a is less than 50° or less than 35°, preferably less than 30°.

3. The image acquisition apparatus (16) as set forth in any one of the claims 1 through 2, ***characterized in that*** the image acquisition unit (1) has a viewing angle b of less than 30°, preferably of less than 15°.

4. The image acquisition apparatus (16) as set forth in any one of the claims 1 through 3, ***characterized in that*** the image acquisition unit (1) has a focal length that is more than double, preferably more than four times, the extension of the greatest diagonal of an acquiring sensor of the image acquisition unit (1).

5. The image acquisition apparatus (16) as set forth in any one of the claims 1 through 4, ***characterized in that*** the angle a is at least half the viewing angle b of the image acquisition unit (1), preferably at least as large as the viewing angle b of the image acquisition unit (1).

6. The image acquisition apparatus (16) as set forth in any one of the claims 1 through 5, ***characterized in that*** an optical device (33) is interposed between the image acquisition unit (1) and the image support surface (31).

7. The image acquisition apparatus (16) as set forth in any one of the claims 1 through 6, ***characterized by*** an illuminating device (39).

8. The image acquisition apparatus (16) as set forth in claim 7, ***characterized in that*** the illuminating device (39) has light-emitting diodes (40) as illuminants.

9. The image acquisition apparatus (16) as set forth in claim 8, ***characterized in that*** the illuminants are disposed in the immediate proximity to the image acquisition unit (1).

10. The image acquisition apparatus (16) as set forth in any one of the claims 7 through 9, ***characterized in that*** the illuminating device (39) has colored illuminants, preferably colored light-emitting diodes (14).

11. The image acquisition apparatus (16) as set forth in any one of the claims 1 through 10, ***characterized by*** at least one optical screen (12) that is disposed outside of a beam path (4) of the image acquisition unit (1).

12. The image acquisition apparatus (16) as set forth in claim 11, ***characterized in that*** the optical screen (12) is interposed between the image support surface (31) and the image acquisition unit (1) and/or an illuminating device (39).

13. The image acquisition apparatus (16) as set forth in any one of the claims 11 or 12, ***characterized in that*** the optical screen (12) has a light-absorbing surface (13) and that said light-absorbing surface is turned toward the image support surface (31).

14. The image acquisition apparatus (16) as set forth in any one of the claims 1 through 13, ***characterized by*** a housing (17) parts of which preferably have a translucent material.

15. The image acquisition apparatus (16) as set forth in claim 14, ***characterized in that*** the translucent material is a reflection-reducing material, preferably an anti-reflection glass.

16. The image acquisition apparatus (16) as set forth in any one of the claims 1 through 15, ***characterized by*** a positioning device (20).

17. The image acquisition apparatus (16) as set forth in claim 16, ***characterized in that*** the positioning device (20) has a protection means, preferably a padding for protecting against damage an item placed on the positioning device (20) and for moreover shielding, in cooperation with the item, the image acquisition unit (1) against ambient light (28).

18. Use of an image acquisition apparatus (16) as set forth in any one of the claims 1 through 17 for acquiring an image from a surface that is covered by at least one transparent layer (32).

19. Use of an image acquisition apparatus (16) as set forth in any one of the claims 1 through 17 for reading an optical code (25) that is shown on a display (2; 26) or on a mirror reflective surface (11).

## Revendications

1. Appareil d'enregistrement d'images (16) pour l'enregistrement d'images en deux dimensions avec une unité d'enregistrement d'images (1) et une surface de support de l'image (31), dans lequel l'axe optique s'étend de l'unité d'enregistrement d'images jusqu'à l'image en traversant la surface de support de l'image, ***caractérisé en ce que*** l'unité d'enregistrement d'images est disposée de telle sorte que le rayon de son axe optique (6) forme un angle a supérieur à 5° par rapport à une normale (7) à la surface de support de l'image (31) dans la zone dans laquelle ce rayon tombe sur l'image qu'il y a lieu d'enregistrer.

2. Appareil d'enregistrement d'images (16) selon la revendication 1, ***caractérisé en ce que*** l'angle a est inférieur à 50° ou inférieur à 35°, de préférence inférieur à 30°.

3. Appareil d'enregistrement d'images (16) selon l'une quelconque des revendications 1 à 2, ***caractérisé en ce que*** l'unité d'enregistrement d'images (1) a un angle de visée b inférieur à 30°, de préférence inférieur à 15°.

4. Appareil d'enregistrement d'images (16) selon l'une quelconque des revendications 1 à 3, ***caractérisé en ce que*** l'unité d'enregistrement d'images (1) comporte une distance focale supérieure au double, de préférence supérieure au quadruple, de l'extension de la plus grande diagonale d'un capteur d'enregistrement de l'unité d'enregistrement d'images (1).

5. Appareil d'enregistrement d'images (16) selon l'une quelconque des revendications 1 à 4, ***caractérisé en ce que*** l'angle a correspond à au moins la moitié de l'angle de visée b de l'unité d'enregistrement d'images (1), et est de préférence égal à l'angle de visée b de l'unité d'enregistrement d'images (1).

6. Appareil d'enregistrement d'images (16) selon l'une quelconque des revendications 1 à 5, ***caractérisé en ce qu'**un* dispositif optique (33) est interposé entre l'unité d'enregistrement d'images (1) et la surface de support de l'image (31).

7. Appareil d'enregistrement d'images (16) selon l'une quelconque des revendications 1 à 6, ***caractérisé par*** un dispositif d'éclairage (39).

8. Appareil d'enregistrement d'images (16) selon la revendication 7, ***caractérisé en ce que*** le dispositif d'éclairage (39) comporte des diodes luminescentes (40) faisant office de moyens d'éclairage.

9. Appareil d'enregistrement d'images (16) selon la revendication 8, ***caractérisé en ce que*** les moyens d'éclairage sont disposés à proximité immédiate de l'unité d'enregistrement d'images (1).

10. Appareil d'enregistrement d'images (16) selon l'une quelconque des revendications 7 à 9, ***caractérisé en ce que*** le dispositif d'éclairage (39) comporte des moyens d'éclairage colorés, de préférence des diodes luminescentes (14) colorées.

11. Appareil d'enregistrement d'images (16) selon l'une quelconque des revendications 1 à 10, ***caractérisé par*** au moins un écran optique (12) qui est disposé en dehors du trajet (4) des rayons de l'unité d'enregistrement d'images (1).

12. Appareil d'enregistrement d'images (16) selon la revendications 11, ***caractérisé en ce que*** l'écran optique (12) est interposé entre la surface de support de l'image (31) et l'unité d'enregistrement d'images (1) et/ou un dispositif d'éclairage (39).

13. Appareil d'enregistrement d'images (16) selon l'une quelconque des revendications 11 ou 12, ***caractérisé en ce que*** l'écran optique (12) comporte une surface absorbant la lumière (13) et que la surface absorbant la lumière est tournée vers la surface de support de l'image (31).

14. Appareil d'enregistrement d'images (16) selon l'une quelconque des revendications 1 à 13, ***caractérisé par*** un boîtier (17) dont de préférence des parties comportent un matériau translucide.

15. Appareil d'enregistrement d'images (16) selon la revendication 14, ***caractérisé en ce que*** le matériau translucide est un matériau réduisant la réflexion, de préférence un verre anti-reflet.

16. Appareil d'enregistrement d'images (16) selon l'une quelconque des revendications 1 à 15, ***caractérisé par*** un dispositif de positionnement (20).

17. Appareil d'enregistrement d'images (16) selon la revendication 16, ***caractérisé en ce que*** le dispositif de positionnement (20) comporte un moyen de protection, de préférence un capitonnage, qui protège un objet amené contre le dispositif de positionnement (20) et prévient son endommagement et qui en sus coopère avec l'objet pour protéger l'unité d'enregistrement d'images (1) contre la lumière ambiante (28).

18. Utilisation d'un appareil d'enregistrement d'images (16) selon l'une quelconque des revendications 1 à 17 pour enregistrer une image d'une surface qui est recouverte d'au moins une couche transparente (32).

19. Utilisation d'un appareil d'enregistrement d'images (16) selon l'une quelconque des revendications 1 à 17 pour la lecture d'un code optique (25) qui est affiché sur un écran (2 ; 26) ou sur une surface (11) à réflexion spéculaire.
